(19)

Europäisches Patentamt
European Patent Office
Office européen des brevets

(11) **EP 4 235 574 A1**

(12) **EUROPEAN PATENT APPLICATION**

(43) Date of publication:
**30.08.2023   Bulletin 2023/35**

(21) Application number: **23153383.7**

(22) Date of filing: **26.01.2023**

(51) International Patent Classification (IPC):
**G06T 7/593** $^{(2017.01)}$        **G06T 7/254** $^{(2017.01)}$
**G06T 7/579** $^{(2017.01)}$

(52) Cooperative Patent Classification (CPC):
**G06T 7/254; G06T 7/579;** G06T 2207/10021;
G06T 2207/20224

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **28.02.2022   JP 2022029630**

(71) Applicant: **CANON KABUSHIKI KAISHA Tokyo 146-8501 (JP)**

(72) Inventor: **OIGAWA, Makoto Tokyo, 146-8501 (JP)**

(74) Representative: **TBK Bavariaring 4-6 80336 München (DE)**

(54) **MEASURING DEVICE, MOVING DEVICE, MEASURING METHOD, AND STORAGE MEDIUM**

(57)     A measuring device including: a stereo image acquiring unit configured to acquire a first image of a first viewpoint and a second image of a second viewpoint at a predetermined first time and acquire a third image of the first viewpoint and a fourth image of the second viewpoint at a second time different from the first time; a stereo distance measuring unit configured to acquire a first distance image from the first image and the second image and acquire a second distance image from the third image and the fourth image; and a movement amount calculating unit configured to calculate a relative movement amount between the stereo image acquiring unit and a subj ect between the first time and the second time on the basis of the first distance image and the second distance image.

FIG. 1

EP 4 235 574 A1

**Description**

BACKGROUND OF THE INVENTION

Field of the Invention

The present invention relates to a measuring device, a moving device, a measuring method, a storage medium, and the like.

Description of the Related Art

Imaging apparatuses having a function for estimating an arrangement relation of cameras between different viewpoints, that is, an amount of movement of a camera on the basis of image signals captured from different viewpoints have been proposed.

In Patent No. 4814669, as a technique for calculating an amount of movement of a camera, a Structure from Motion (SfM) method is used. In the SfM method, a standardized relative amount of movement is calculated, and thus it is necessary to scale the amount of movement of a camera to an actual amount using information supplied from another device such as an Inertial Measurement Unit (IMU) or the like. In this way, conventionally, a device such as an IMU or the like other than the imaging apparatus needs to be included, and it is difficult to reduce the cost.

SUMMARY OF THE INVENTION

According to one aspect of the present invention, a measuring device includes at least one processor or circuit configured to function as: a stereo image acquiring unit configured to acquire a first image of a first viewpoint and a second image of a second viewpoint at a predetermined first time and acquire a third image of the first viewpoint and a fourth image of the second viewpoint at a second time different from the first time; a stereo distance measuring unit configured to acquire a first distance image from the first image and the second image and acquire a second distance image from the third image and the fourth image; and a movement amount calculating unit configured to calculate a relative movement amount between the stereo image acquiring unit and a subject between the first time and the second time on the basis of the first distance image and the second distance image.

Further features of the present invention will become apparent from the following description of embodiments with reference to the attached drawings.

BRIEF DESCRIPTION OF THE DRAWINGS

Fig. 1 is a functional block diagram illustrating a configuration of a distance measuring device according to a first embodiment.
Fig. 2 is a flowchart of a process of a distance measuring device according to the first embodiment.
Fig. 3A is a diagram illustrating a first image 121 of a first viewpoint at a time 11, Fig. 3B is a diagram illustrating a distance image 141 at the time 11, and Fig. 3C is a diagram illustrating a third image 123 of the first viewpoint at a time t2. Fig. 3D is a diagram illustrating a distance image 142 at the time t2, and Fig. 3E is a diagram illustrating a distance differential image 143 that is a relative distance value.
Fig. 4A is a flowchart illustrating a camera movement amount calculation process according to a second embodiment. Fig. 4B is a detailed flowchart of Step S403.
Fig. 5 is a diagram illustrating a relation between coordinates (u, v) of a pixel on an image and space coordinates (X, Y, Z) corresponding thereto.
Fig. 6A is a diagram illustrating space coordinates (X, Y, Z) calculated from a distance image 141 of a frame time t1, and Fig. 6B is a diagram illustrating space coordinates (X, Y, Z) calculated from a distance image 142 of a frame time t2.
Fig. 7 is a histogram having a horizontal axis as a relative distance value and a vertical axis as a frequency.
Fig. 8 is a functional block diagram illustrating a configuration of a distance measuring device according to a third embodiment.
Fig. 9A is a functional block diagram illustrating a configuration of a distance measuring device 900 according to a fourth embodiment, Fig. 9B is a schematic diagram illustrating a configuration of a camera device 911, Fig. 9C is a schematic diagram illustrating a light reception surface of an image sensor 913, and Fig. 9D is a schematic diagram of a cross-section I - I' of a unit pixel 930 of the image sensor 913. Fig. 9E is a diagram illustrating a principle of a pupil division system.
Figs. 10A, 10B, and 10C are schematic diagrams for illustrating a principle of an imaging surface phase difference distance measuring system using the image sensor 913 and an imaging optical system 912 according to the fourth embodiment.
Fig. 11 is a functional block diagram illustrating a configuration of a distance measuring device 1100 according to a fifth embodiment.
Fig. 12A is a diagram illustrating a result of calculation of feature points 1133 for a first image of a first viewpoint at a time t1, and Fig. 12B is a diagram illustrating a result of calculation of feature points 1134 for a third image of the first viewpoint at a time t2. Fig. 12C is a diagram illustrating a calculated optical flow 1132.

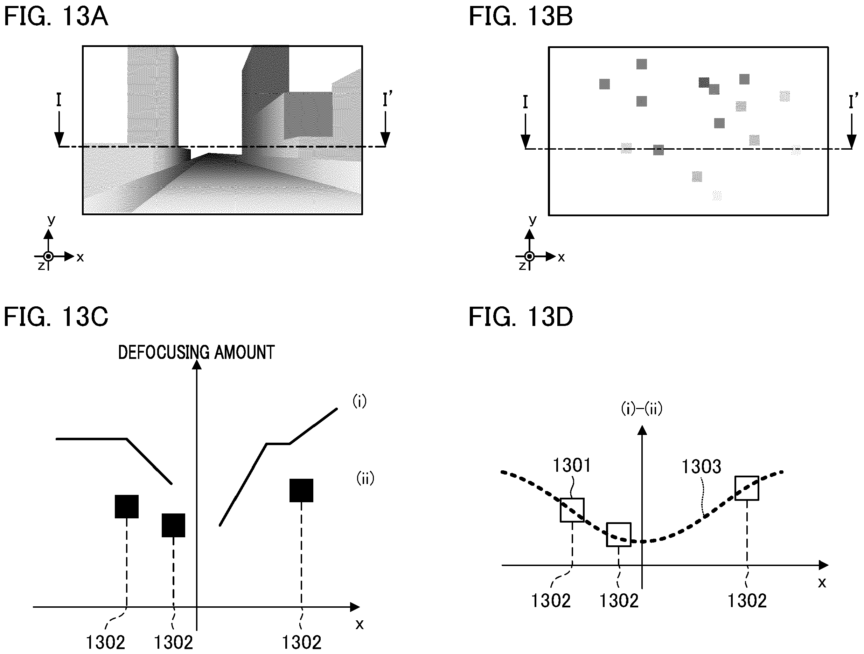

Fig. 13A is a diagram illustrating a distribution of first distance values 1151 according to the stereo distance measuring unit 1102 acquired by converting a distance image 1121 at a time t1, which are calculated by a stereo distance measuring unit 1102, into an image-side defocusing amount, and Fig. 13B is a diagram illustrating a distribution of second distance values 1152 calculated by a feature point distance measuring unit 1103. Fig. 13C is a diagram illustrating an image-side defocusing amount along I- I' in Figs. 13A and 13B. Fig. 13D is a diagram illustrating an amount acquired by subtracting (ii) that is a second distance value 1152 according to a feature point distance measuring unit from (i) that is a first distance value 1151 according to a stereo distance measuring unit illustrated in Fig. 13C.

Fig. 14A is a schematic diagram illustrating a configuration of a vehicle 1400 as a movable apparatus according to a sixth embodiment, and Fig. 14B is a functional block diagram of the vehicle 1400.

## DESCRIPTION OF THE EMBODIMENTS

Hereinafter, with reference to the accompanying drawings, favorable modes of the present invention will be described using Embodiments. In each diagram, the same reference signs are applied to the same members or elements, and duplicate description will be omitted or simplified.

(First Embodiment)

In a first embodiment, an amount of movement of a camera is calculated by comparing distance values between different frames only using an image acquired by an imaging apparatus (camera).

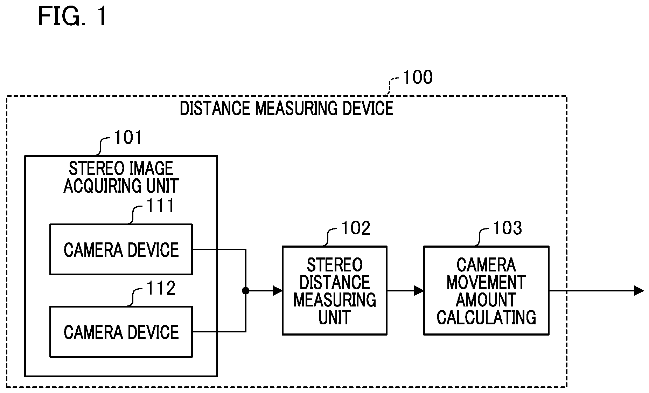

Fig. 1 is a functional block diagram illustrating a configuration of a distance measuring device according to a first embodiment. Some of functional blocks illustrated in Fig. 1 are realized by causing a CPU, which is not illustrated, as a computer included in the distance measuring device 100 to execute a computer program stored in a memory as a storage medium not illustrated in the drawing.

However, some or all thereof may be realized using hardware. As the hardware, a dedicated circuit (ASIC), a processor (a reconfigurable processor, DSP), or the like can be used.

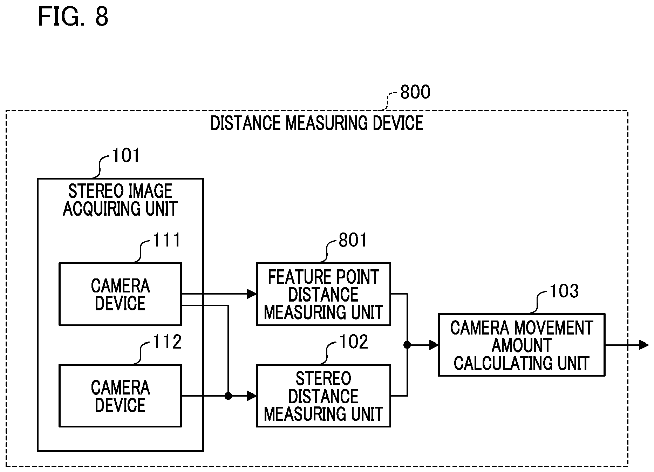

The functional blocks illustrated in Fig. 1 may not be built into the same casing and may be configured by using other devices connected through a signal path. The description presented above can be applied also to functional block diagrams illustrated in Figs. 8, 9A, 11, and 14.

The distance measuring device 100 is a measuring device including a stereo image acquiring unit 101, a stereo distance measuring unit 102, and a camera movement amount calculating unit 103, and, in the following embodiment, an example in which an amount of movement of a camera is measured will be described. However, in the following embodiment, an amount of movement may be an amount of relative movement between a camera and a subject.

The stereo image acquiring unit 101 includes a camera device 111 and a camera device 112, and both the camera devices are disposed to be away from each other by a predetermined gap (a base line length) set in advance. In addition, the camera devices are disposed such that a common range is present between angles of view thereof. Each of the camera device 111 and the camera device 112 includes an imaging optical system, an image sensor, and an image storing unit that are not illustrated in the drawing.

For example, the image sensor is composed of a complementary metal-oxide-semiconductor (CMOS) and a charge-coupled device (CCD) and performs photoelectric conversion of a subject image that is formed on an image sensor as an image through an imaging optical system, thereby acquiring an image signal. The acquired image signal is temporarily stored in an image storing unit composed of a memory.

A first image 121 of a first viewpoint is acquired from the camera device 111, and a second image 122 of a second viewpoint is acquired from the camera device 112.

At a predetermined time t1 (a first time), an image set 131 that is one set of images formed from the first image 121 of the first viewpoint and the second image 122 of the second viewpoint acquired by the stereo image acquiring unit 101 is supplied to the stereo distance measuring unit 102. Then, a distance image 141 (a first distance image) is calculated using a technique to be described below.

In addition, an image set 132 formed from a third image 123 of the first viewpoint and a fourth image 124 of the second viewpoint acquired at a time t2 (a second time; t1 < t2) after a first frame period is supplied to the stereo distance measuring unit 102, and a distance image 142 (a second distance image) is calculated.

In other words, the stereo image acquiring unit 101 acquires the first image of the first viewpoint and the second image of the second viewpoint at a predetermined first time. In addition, the third image of the first viewpoint and the fourth image of the second viewpoint are acquired at a second time different from the first time.

Meanwhile, the stereo distance measuring unit 102 acquires a first distance image from the first image and the second image and a second distance image from the third image and the fourth image.

The distance image 141 calculated by the stereo distance measuring unit 102 using the image set 131 acquired at the time t1 and the distance image 142 calculated by the stereo distance measuring unit 102 using the image set 132 acquired at the time t2 are supplied to the camera movement amount calculating unit 103.

Then, the camera movement amount calculating unit 103 compares the distance image 141 and the distance image 142 with each other using a technique described below and calculates a relative distance value from the set of the distance image 141 and the distance image 142. The camera movement amount calculating unit 103 calculates and outputs a camera movement amount that is an amount of movement of the camera (the stereo image acquiring unit) in a time from the time t1 to the time t2 using the calculated relative distance value.

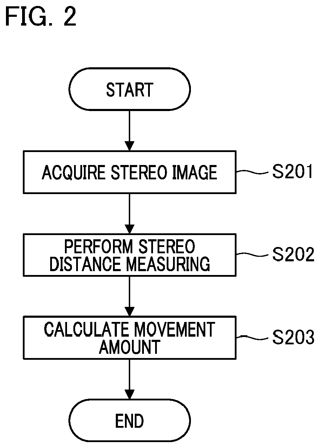

Fig. 2 is a flowchart of a process of the distance measuring device according to the first embodiment. By a CPU as a computer inside the distance measuring device 100 executing a computer program stored in a memory, an operation of each step of the flowchart illustrated in Fig. 2 is performed.

In Step S201, by using the stereo image acquiring unit 101, a first image of a first viewpoint and a second image of a second viewpoint are acquired at a predetermined first time, and a third image of the first viewpoint and a fourth image of the second viewpoint are acquired at a second time. Here, Step S201 functions as a stereo image acquiring step.

In addition, in Step S202, the CPU inside the distance measuring device 100 acquires a first distance image from the first image and the second image and acquires a second distance image from the third image and the fourth image by using the stereo distance measuring unit 102. Here, Step S202 functions as a stereo distance measuring step.

More specifically, the stereo distance measuring unit 102 performs a stereo distance measurement preprocess formed from a light quantity correcting process and a noise reducing process, calculates a parallax amount, and converts the acquired parallax amount into a distance value. The noise reducing process is a process of reducing a noise component, for example, using passage through a bandpass filter.

In a parallax amount calculating process, correlation values are calculated while reference areas of the same shape having respective reference points set in the second image 122 as respective centers are sequentially moved with respect to a collation area having a point of interest set in the first image 121 as its center. Then, an amount of positional deviation between a reference point having the highest correlation and the point of interest is set as a parallax amount.

As a method for calculating a correlation value, Sum of Squared Difference (SSD) for evaluating a squared sum of differences between image signals, Sum of Absolute Difference (SAD) for evaluating an absolute value of differences, and the like can be used.

The calculated parallax amount is geometrically converted into a distance value L using a base line length W that is a predetermined gap between the camera device 111 and the camera device 112 and a focal distance f of the optical system. In this way, by calculating parallax amounts and distance values for all the pixels configuring an image signal, a first distance image is calculated from the first image 121 and the second image 122. Similarly, a second distance image is calculated from the third image 123 and the fourth image 124.

In Step S203, the CPU inside the distance measuring device 100 calculates an amount of movement over time in which the stereo image acquiring unit 101 has moved for one frame period on the basis of a set of first and second distance images acquired at times t1 and t2 that are different by one frame period.

Here, Step S203 functions as a movement amount calculating step (a movement amount calculating unit) for calculating an amount of movement of the stereo image acquiring unit between the first time and the second time on the basis of the first distance image and the second distance image.

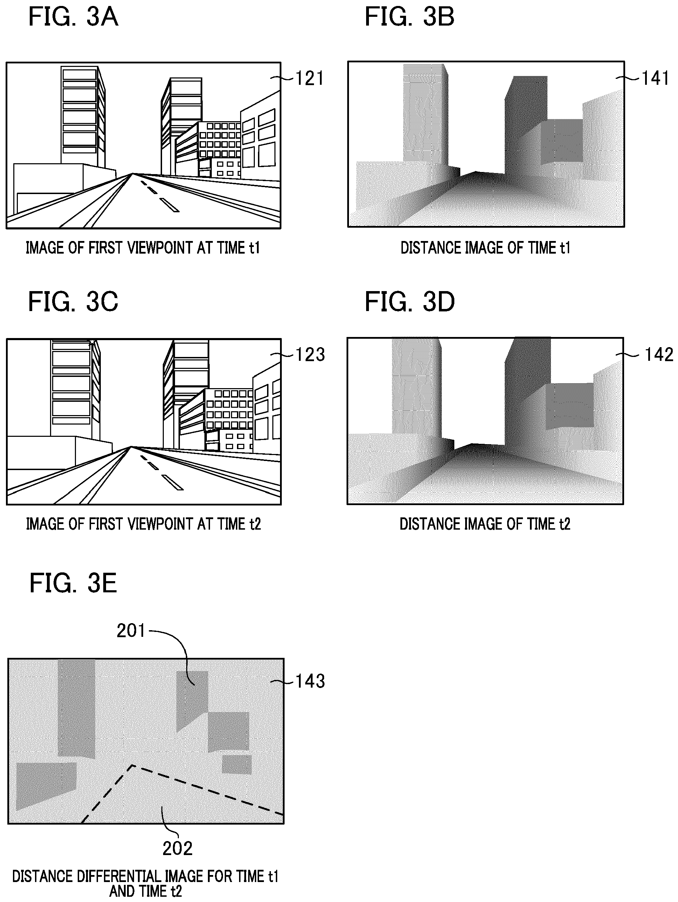

Figs. 3A to 3E are diagrams illustrating distance images calculated using an image set of an image of a first viewpoint and an image of a second viewpoint, which is not illustrated, acquired at each time of a time t1 and a time t2 (t1 < t2). Fig. 3A is a diagram illustrating a first image 121 of the first viewpoint acquired at the time t1.

Fig. 3B is a diagram illustrating a distance image 141 of the time 11, and the distance image 141 is calculated using the first image 121 of the first viewpoint at the time t1 and an image of the second viewpoint, which is not illustrated, at the time t1.

Fig. 3C is a diagram illustrating a third image 123 of the first viewpoint at the time t2. Fig. 3D is a diagram illustrating a distance image 142 of the time t2, and the distance image 142 is calculated using the third image 123 of the first viewpoint at the time t2 and an image of the second viewpoint, which is not illustrated, at the time t2.

Fig. 3E is a diagram illustrating a distance differential image 143 that is a relative distance value. In the distance images 141 and 142, the darker the color, the larger the distance value, in other words, the farther from a camera device.

In Step S203 for calculating an amount of movement of the camera, by subtracting the distance image 142 of the time t2 from the distance image 141 of the time 11, as illustrated in Fig. 3E, a distance differential image 143 that is a relative distance value is calculated.

In the distance differential image 143 illustrated in Fig. 3E, a front face of a building confronting a camera device, for example, an area 201 represents a distance by which the camera device becomes closer to the building, that is, a camera movement amount, in accordance with a change of the time from t1 to t2.

In Fig. 3E, since a distance from the camera device does not change even when the time changes from t1 to t2, an area in which a road surface and the like illustrated in the area 202 have a continuous distance distribution represents a value that is almost the same as 0. Although 0 or a value other than the camera movement amount is included in the other area, the ratio thereof is low.

In this way, in the acquired distance differential image 143, a value of a camera movement amount that is a movement distance of the camera device in an optical axis direction is included. Thus, by generating a histogram of a relative distance value for each pixel of the distance differential image 143 and calculating a most frequent value, a camera movement amount can be calculated. At this time, by eliminating values near 0 using a predetermined threshold and calculating a most frequency value, accuracy of calculation of the camera movement amount can be improved.

In addition, a camera movement amount may be acquired by calculating a median value or a mean value of relative distance values for pixels of the distance differential image 143, and, in such a case, an arithmetic operation load can be reduced. In other words, by statistically processing relative distance values for the pixels of the first distance image and the second distance image, for example, an amount of movement may be calculated on the basis of any one of a most frequent value, a median value, and a mean value.

According to the first embodiment, even when information of other devices such as an IMU and the like is not used, a camera movement amount can be calculated simply from a captured image acquired by a camera device. Therefore, a distance acquiring system including camera devices can be reduced in size, and the cost can be reduced.

(Second Embodiment)

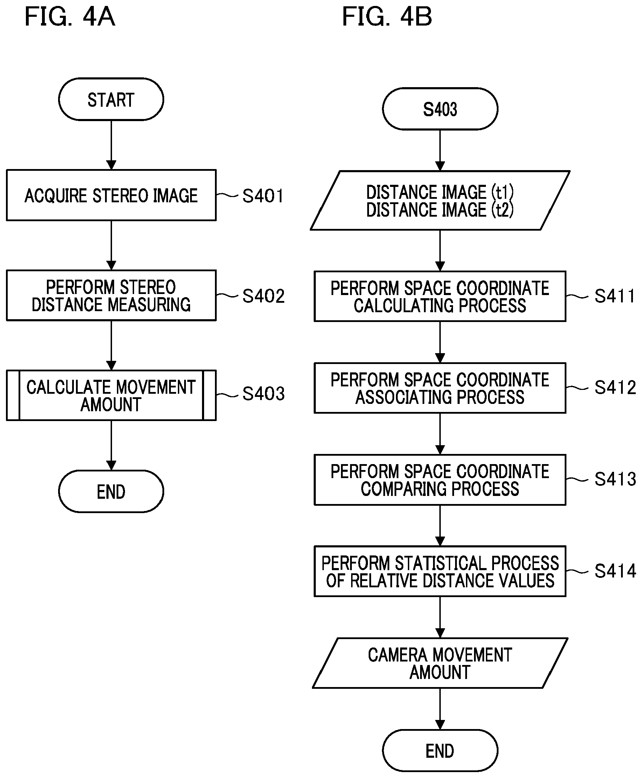

A device configuration of the second embodiment is similar to that of the distance measuring device 100 illustrated in Fig. 1. Fig. 4A is a flowchart illustrating a camera movement amount calculating process according to the second embodiment, and Fig. 4B is a detailed flowchart of Step S403.

By a CPU as a computer of the inside of a distance measuring device 100 executing a computer program stored in a memory, operations of steps of the flowcharts illustrated in Figs. 4A and 4B are performed.

In Step S401, the CPU inside the distance measuring device 100, similar to Step S201 described above, acquires a first image of a first viewpoint and a second image of a second viewpoint at a predetermined first time using a stereo image acquiring unit 101. In addition, the CPU acquires a third image of the first viewpoint and a fourth image of the second viewpoint at a second time.

Next, in Step S402 (a stereo distance measuring step), the CPU inside the distance measuring device 100 acquires a first distance image from the first image and the second image and acquires a second distance image from the third image and the fourth image by using a stereo distance measuring unit 102.

Next, in Step S403 (a movement amount calculating step), the CPU inside the distance measuring device 100 calculates a camera movement amount from a set of the first distance image and the second distance image at times t1 and t2 of a different frame.

At that time, in the second embodiment, by performing comparison of corresponding points by performing association with coordinates of a subject space side and statistically processing a calculated relative distance value, a camera movement amount is calculated.

In Step S411, the CPU of the distance measuring device 100 acquires a distance image 141 (the first distance image) of the time t1 and a distance image 142 (the second distance image) of a time t2 (t1 < t2) of a different frame. Then, the CPU calculates space coordinates (X,Y,Z) on the basis of coordinates (h,v) of a pixel in each distance image and a corresponding distance value (L).

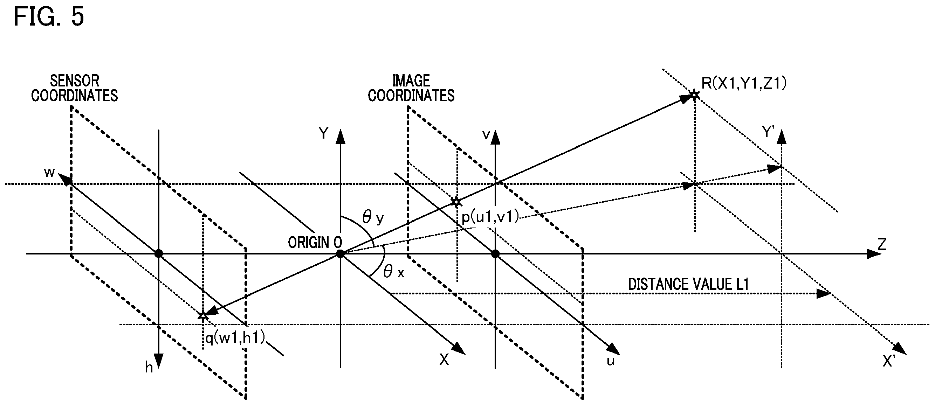

Fig. 5 is a diagram illustrating a relation between coordinates (u,v) of a pixel on an image and a corresponding space coordinates (X,Y,Z), and a calculation method thereof will be described.

First, a space coordinate system (X,Y,Z) is set. The origin of the space coordinate system (X,Y,Z) is set to a main point of a camera device 111 acquiring an image of a first viewpoint. In addition, an optical axis of the camera device 111 and a Z axis coincide with each other.

When a subject R present in a space is imaged, it is imaged as an image of a point $p(u1,v1)$ of an image coordinate system (u,v) that is coordinates of a pixel of an acquired captured image.

For a point $p(u1,v1)$ in image coordinates of a first image of a first viewpoint, a stereo distance measuring process is performed to calculate a distance value L1 in Step S402, and a point $p(u1,v1)$ on a distance image having the calculated distance value L1 is generated.

The distance value L1 represents a distance between a face defined by coordinates axes X and Y and a face (X',Y'). The face (X',Y') is a plane including a subject R and is a face parallel to the face defined by the coordinate axes X and Y

In addition, the point $p(u1,v1)$ on the image coordinates corresponds to a point $q(w1,h1)$ on a sensor coordinate system (w,h).

The coordinates $(u1,v1)$ of the point p in the image coordinate system is acquired from an acquired image. In addition, the coordinates $(w1,h1)$ of the point q in the sensor coordinate system has one-to-one correspondence in a state in which each axis is inverted and are acquired as $u1 = w1$ and $v1 = h1$. The reason for this is that the number of pixels of an acquired captured image and the number of pixels of an image sensor coincide with each other.

For coordinates $(w1,h1)$ of the point q in the sensor coordinate system, an angle $\theta x$ formed by an incident light beam and an X axis and an angle $\theta y$ formed by the incident light beam and a Y axis are acquired from lens designed values of an imaging optical system.

Here, $\theta x$ is an angle formed by a line acquired by projecting an incident light beam onto an XZ plane and the X axis, and $\theta y$ is an angle formed by a line acquired by projecting the incident light beam onto a YZ plane and the Y axis. From these, space coordinates $(X1,Y1,Z1)$ of the subject R are acquired using the following Equations 1 to 3.

$$X1 = L1 \times \tan\theta x \ldots \text{(Equation 1)}$$

$$Y1 = L1 \times \tan\theta y \ldots \text{(Equation 2)}$$

$$Z1 = L1 \ldots \text{(Equation 3)}$$

In this way, in Step S411, each space coordinates (X,Y,Z) are calculated on the basis of coordinates (h,v) of each pixel on each of distance images of times t1 and t2 and a distance value (L) corresponding thereto.

In Step S412, the CPU inside the distance measuring device 100 performs association between space coordinates corresponding to each pixel of the distance image 141 of the time t1 and space coordinates corresponding to each pixel of the distance image 142 of a time t2 (t1 < t2) of a different frame. In other words, association between positions having a high possibility of being the same subject imaged at different pixel positions of different frame times is performed.

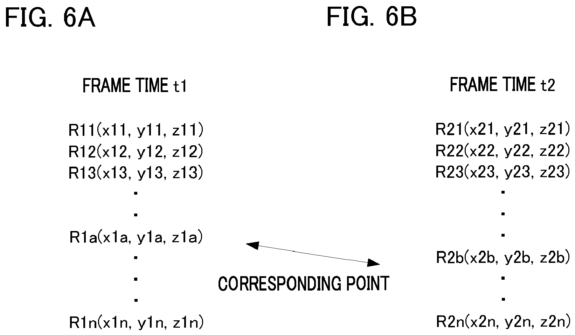

Fig. 6A is a diagram illustrating space coordinates (X,Y,Z) calculated from the distance image 141 of the frame time t1. For example, the first "1" of x13 of the suffix in R13(x13, y13, z13) represents a frame number, and the second "3" of the suffix represents a pixel number.

A total number of pixels of the acquired image is assumed to be n. Similarly, Fig. 6B is a diagram illustrating space coordinates (X,Y,Z) calculated from the distance image 142 of the frame time t2. For two data sets of three rows and n columns, association is performed on the basis of values of (X,Y,Z).

The association of the space coordinates (X,Y,Z) is performed using a known technique. More specifically, for space coordinates R1a (x1a,y1a,z1a) of the frame time t1, an Euclid distance is calculated using each space coordinates (X,Y,Z) of the frame time t2, and space coordinates R2b(x2b,y2b,z2b) taking a minimum value is set as a corresponding point.

While a frame rate of a camera device is equal to or higher than 1 fps, and each space coordinates (X,Y,Z) is generally in order of meters, a camera movement amount between frames is small, and thus association of space coordinates (X,Y,Z) between such different frames can be performed.

In Step S412, in this way, a process of associating one of space coordinates R21 to R2n of the time t2 with each of the space coordinates R11 to R1n of the time t1 is performed. In addition, association between space coordinates is not limited to this technique, and a determination value such as a Manhattan distance or the like may be used, and a determination process such as a k-nearest neighbor method or the like may be used.

In Step S413, the CPU inside the distance measuring device 100 calculates a relative distance value by taking a difference between a Z value of each of the space coordinates R11 to R1n of the time t1 and a Z value of each space coordinates corresponding to the time t2 at which the space coordinates associating process is performed in Step S412.

More specifically, by using space coordinates R2b (x2b,y2b,z2b) of the frame time t2 associated with the space coordinates R1a (x1a,y1a,z1a) of the frame time t1, a relative distance value z2b - z1a of the space coordinates R1a of the frame time t1 is calculated. In this way, for all the space coordinates R11 to R1n of the frame time t1, relative distance values are calculated.

In Step S414, the CPU inside the distance measuring device 100 statistically processes the relative distance values for all the space coordinates R11 to R1n of the frame time t1 calculated in the space coordinates comparing process of Step S413, thereby calculating a camera movement amount.

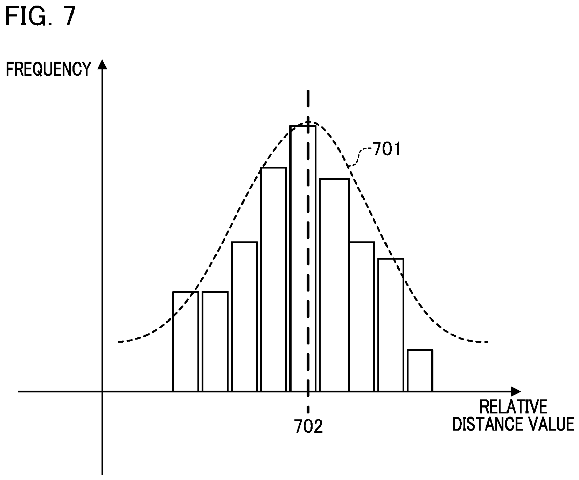

Fig. 7 is a histogram having a relative distance value as a horizontal axis and having a frequency as a vertical axis. When a histogram of relative distance values that have been calculated in the space coordinate comparing process in Step S413 described above is taken, a distribution in which a camera movement amount in an optical axis direction is reflected is formed.

Here, in places of a continuous distribution such as a road surface of the like, many relative distance values near 0 are calculated as described above, and thus relative distance values of a predetermined threshold or less are eliminated.

In addition, various errors are included in distance values calculated in the stereo distance measuring process in Step S402, and thus calculated relative distance values also include errors, and the histogram has a distribution. Thus, by fitting a monophasic approximation curve 701 to a distribution of these frequency values, a relative distance value 702 having a peak thereof is calculated.

The peak of the relative distance value 702 calculated in this way is output as a movement amount in Step S403. In other words, the movement amount described above is calculated on the basis of the peak of the approximation curve fitted to the histogram of the relative distance values.

In addition, for the space coordinates R1a (x1a,y1a,z1a) of the frame time t1 and the space coordinates R2b (x2b, y2b, z2b) of the frame time t2 associated with each other in the space coordinates comparing process of Step S413, a relative distance value of each of XYZ components may be calculated. In other words, similar to a relative distance value z2b - z1a of the Z component, a relative distance value x2b - x1a of the X component, and a relative distance value y2b - y1a of the Y component are calculated.

Furthermore, in a relative distance value statistical process of Step S414, similarly, peak fitting of each component is performed, and a camera movement amount of each component is calculated. In accordance with this, a camera movement amount in a direction other than the optical axis direction can be calculated as well, and a case in which a camera device performs a complex movement other than movement only in one direction can be also responded.

In addition, it is also preferrable from a viewpoint of improvement of accuracy to compare XYZ components of the camera movement amount with each other and calculate only values of components larger than a threshold, which has been appropriately set, as main components of camera movement.

As described above, in the second embodiment, by performing association for each of pixels on the basis of information of an optical system in the first distance image and the second distance image and comparing distance information of pixels associated with each other, a relative distance value is calculated.

In addition, in the space coordinate comparing process of Step S413, data taking a difference between distance values of pixels associated with each other is sampled more, whereby a smoothing effect is acquired. Furthermore, by detecting a peak using fitting of an approximation curve, a value of an order lower than accuracy of calculation of a relative distance value can be calculated, and thus accuracy of calculation of a camera movement amount is improved.

(Third Embodiment)

In a third embodiment, a position/posture change amount of a camera (a stereo image acquiring unit 101) is calculated by performing an SfM method using an acquired image, and a relative distance value is scaled using the position/posture change amount of the camera to calculate a movement amount of the camera.

Fig. 8 is a functional block diagram illustrating a configuration of a distance measuring device according to the third embodiment.

The distance measuring device 800, similar to that illustrated in Fig. 1, includes a stereo image acquiring unit 101, a stereo distance measuring unit 102, and a camera movement amount calculating unit 103, and, the stereo image acquiring unit 101 includes a camera device 111 and a camera device 112. In addition, the distance measuring device 800 includes a feature point distance measuring unit 801.

One set of images (image set) formed from a first image 121 of a first viewpoint and a second image 122 of a second viewpoint acquired at a time t1 by the stereo image acquiring unit 101 is supplied to the stereo distance measuring unit 102, and a distance image 141 is calculated.

Similarly, an image set formed from a third image 123 of the first viewpoint and a fourth image 124 of the second viewpoint acquired at a time t2 (t1 < t2) by the stereo image acquiring unit 101 is supplied to the stereo distance measuring unit 102, and a distance image 142 is calculated. The distance image 141 and the distance image 142 that have been calculated are supplied to the camera movement amount calculating unit 103, and a relative distance value is calculated using a method similar to the method described above.

In addition, the first image 121 of the first viewpoint acquired at the time t1 by the stereo image acquiring unit 101 and the third image 123 of the first viewpoint acquired at a different frame time t2 are supplied to the feature point distance measuring unit 801. Then, feature points are calculated using the SfM method, the feature points are compared with each other, and a camera position/posture change amount is calculated. Hereinafter, calculation and comparison of feature points using the SfM method will be described more specifically.

Relating to calculation of an optical flow, for the first image 121 of the first viewpoint acquired at the time t1 and the third image 123 of the first viewpoint acquired at the different frame time t2, feature points are calculated using a Harris corner detection algorithm that is a known technique.

Association between feature points calculated in the first image 121 and the third image 123 is performed using a Kanade-Lucas-Tomasi (KLT) feature tracking algorithm that is a known technique, and an optical flow is calculated. In addition, the algorithm used for calculation of feature points and feature quantities and calculation of the optical flow is not limited to the technique described above.

For example, Features from Accelerated Segment Test (FAST), Binary Robust Independent Elementary Features (BRIEF), Oriented FAST and Rotated BRIEF (ORB), or the like may be used.

A camera movement amount that is a movement amount of a camera between the time t1 at which the first image 121 is acquired and the time t2 at which the third image 123 is acquired is calculated using a known technique. More specifically, a camera fundamental matrix F is acquired using an 8-point algorithm such that an epipolar constraint is satisfied using feature points calculated in the first image 121 at the time 11, feature points calculated in the third image 123 at the time t2, and an optical flow that is a correspondence relation thereof.

At this time, by also using a Random Sample Consensus (RANSAC) method, deviating values are efficiently excluded, and a camera movement amount may be calculated as a stable technique. The camera fundamental matrix F is decomposed into a camera basic matrix E using a known technique, and a rotation movement amount R ($\omega$x,$\omega$y,$\omega$z) and translational moving amount T (tx, ty, tz) that are camera external parameters are acquired from the camera basic matrix E.

A combination of the rotation movement amount R ($\omega$x,$\omega$y,$\omega$z) and the translational moving amount T (tx, ty, tz) that have been acquired become a camera position/posture change amount from the time t1 to the time t2. Here, the acquired translational moving amount T (tx, ty, tz) is a standardized relative displacement amount from the time t1 to the time t2, and scaling is not determined, and thus a camera movement amount in actual size is not clear.

Thus, the rotation movement amount R ($\omega x, \omega y, \omega z$) and the translational moving amount T (tx, ty, tz) that are the calculated camera position/posture change amount are supplied to the camera movement amount calculating unit 103, and scaling is performed using the relative distance value calculated as described above.

In other words, a relative distance value 702 that is an actual movement amount in the camera optical axis direction from the time t1 to the time t2 calculated using the technique described above and an optical axis direction component tz of the translational moving amount T in the camera position/posture change amount are compared with each other, and a coefficient k for which both coincide with each other is calculated.

In other words, a coefficient k satisfying Lc = k $\times$ tz using the relative distance value 702 as Lc is calculated. Then, by having k times the translational moving amount (tx, ty, tz), a camera movement amount T (k $\times$ tx, k $\times$ ty, k $\times$ tz) that is a movement amount of an actual camera (the stereo image acquiring unit) is calculated. In addition, in a case in which a value of each of the XYZ components is calculated as a relative distance value, similarly, longitude and latitude numbers kx, ky, and kz of the components are calculated, and a camera movement amount (kx $\times$ tx, ky $\times$ ty, kz $\times$ tz) is calculated.

In this way, in the third embodiment, a position/posture change amount of the stereo image acquiring unit is calculated on the basis of a correspondence relation between feature points of the first image and the third image by the feature point distance measuring unit 801, and scaling of the position/posture change amount is performed using a relative distance value by the camera movement amount calculating unit 103.

In accordance with that, scaling of the SfM method can be performed only using a captured image acquired by an imaging apparatus without using other devices such as an IMU and the like, a camera movement amount of an actual dimension can be calculated without using other devices, and thus the cost can be reduced.

In addition, compared to a case in which a camera movement amount is calculated only using a relative distance value from a distance image set, by also using the SfM method, posture information (angle information) can be acquired simultaneously with position information, and thus accuracy at the time of performing mapping of an image of its own camera into another camera image is improved.

(Fourth Embodiment)

As a fourth embodiment, an example in which a stereo image acquiring unit performs distance measuring of an imaging surface phase difference distance measuring system using an image sensor of a pupil division system will be described.

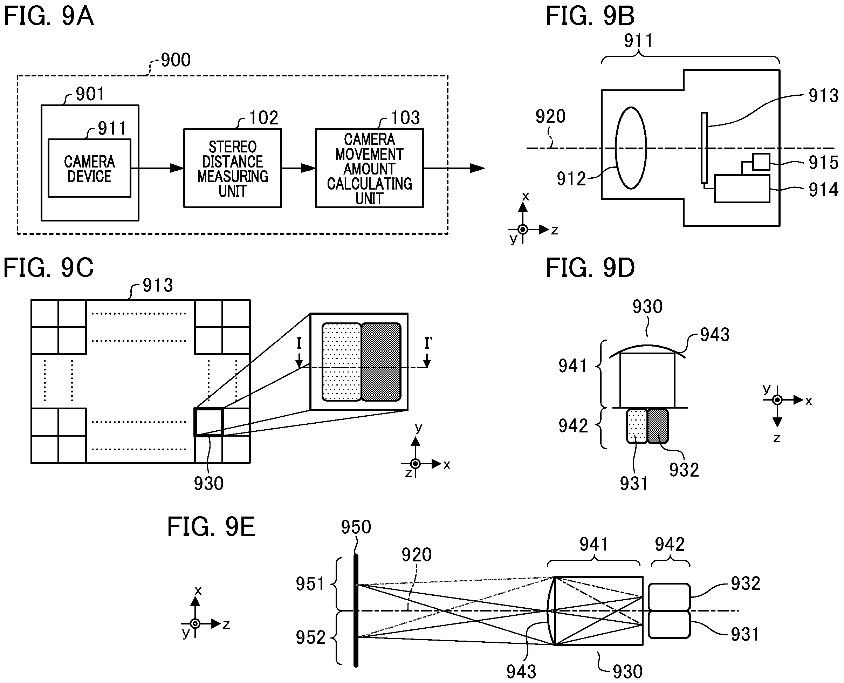

Fig. 9A is a functional block diagram illustrating a configuration of a distance measuring device 900 according to the fourth embodiment, and Fig. 9B is a schematic diagram illustrating a configuration of a camera device 911.

A stereo image acquiring unit 901 is composed of one camera device 9111 composed of one optical system and one image sensor of a pupil division system. The stereo image acquiring unit 901 includes the stereo distance measuring unit 102 and the camera movement amount calculating unit 103 described above. As illustrated in Fig. 9B, the camera device 911 includes an imaging optical system 912, an image sensor 913, an image storing memory 914, and a signal transmitting unit 915.

A subject image formed on the image sensor 913 through the imaging optical system 912 is photoelectrically converted, whereby an image signal is acquired. The acquired image signal, after being image processed, is stored in the image storing memory 914 and is transmitted to the outside of the camera device 911 by the signal transmitting unit 915.

In the fourth embodiment, a z axis is parallel to an optical axis 920 of the imaging optical system 912, and an x axis and a y axis are perpendicular to each other and are perpendicular to the optical axis.

The image sensor 913 is an image sensor of a pupil division system having a distance measuring function using an imaging surface phase difference distance measuring system. Fig. 9C is a schematic diagram illustrating a light reception surface of the image sensor 913, and Fig. 9D is a schematic diagram of a cross-section I-I' of a unit pixel 930 of the image sensor 913.

The image sensor 913 is configured by arranging a plurality of unit pixels 930 in each of xy directions. A light receiving layer of the unit pixel 930 is composed of two photoelectric conversion units (a first photoelectric conversion unit 931 and a second photoelectric conversion unit 932). In Fig. 9D, the unit pixel 930 is composed of a light guiding layer 941 and a light receiving layer 942.

In the light guiding layer 941, a micro lens 943 used for efficiently guiding light fluxes incident to a unit pixel to the photoelectric conversion unit, a color filter, which is not illustrated, used for passing light of a predetermined wavelength band, wirings, which are not illustrated, used for reading an image and driving pixels, and the like are disposed. In the light receiving layer 942, the first photoelectric conversion unit 931 and the second photoelectric conversion unit 932 that are two photoelectric conversion units used for photoelectric conversion of received light are disposed.

In accordance with the configuration of the image sensor of the pupil division system having such a unit pixel structure, by using a configuration composed of one imaging optical system and one image sensor, a first image and a second image of which viewpoints are different from each other can be acquired.

Fig. 9E is a diagram for illustrating a principle of the pupil division system and illustrates an emission pupil 950 of the imaging optical system 912 and a unit pixel 930 near a center image height as a representative example of a pixel among unit pixels 930 disposed in the image sensor 913.

The micro lens 943 disposed inside the unit pixel 930 is disposed such that the emission pupil 950 and the light receiving layer 942 have an optically conjugate relation. As a result, light fluxes that have passed through a first pupil area 951 that is a partial pupil area of the emission pupil 950 are incident to the first photoelectric conversion unit 931.

Similarly, light fluxes that have passed through a second pupil area 952 that is a partial pupil area are incident to the second photoelectric conversion unit 932. In the case of the unit pixel in a peripheral part of the image sensor, although a main light beam is inclined, and a inclined incidence relation is formed, a correspondence relation between this partial pupil area, light fluxes, and the photoelectric conversion unit does not change.

As described above, a plurality of unit pixels 930 are arranged in the image sensor 913, and a photoelectrically-converted signal is acquired by the first photoelectric conversion unit 931 of each unit pixel, and a first image of a first viewpoint is generated.

Similarly, a photoelectrically-converted signal is acquired by the second photoelectric conversion unit 932 of each unit pixel, and a second image of a second viewpoint is generated. In this way, by using a configuration composed of one imaging optical system and one image sensor, the first image and the second image of which viewpoints are different from each other in accordance with the pupil division system can be acquired.

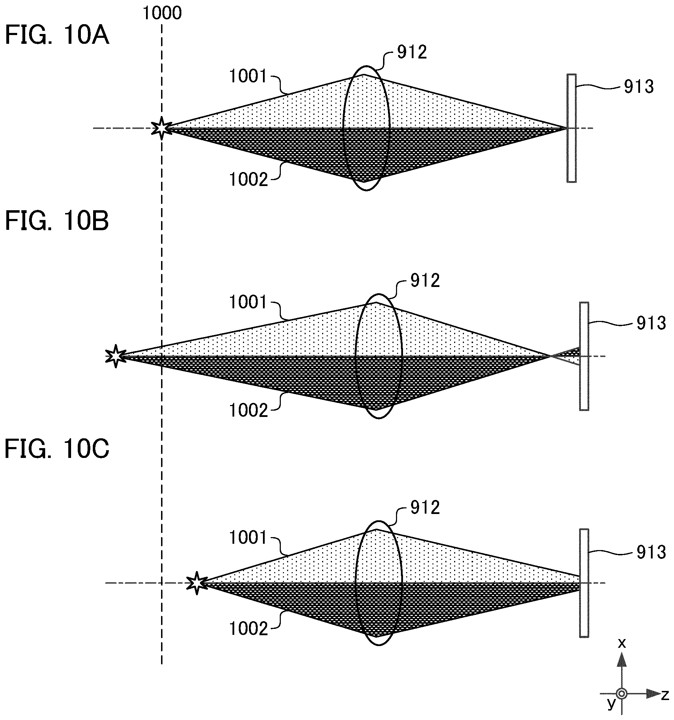

Figs. 10A, 10B, and 10C are schematic diagrams for illustrating a principle of the imaging surface phase difference distance measuring system using the image sensor 913 and the imaging optical system 912 according to the fourth embodiment.

Defocusing occurs on an image side in accordance with a positional relation between the position of a subject and an in-focus position 1000 of the imaging optical system 912, parallax between the first image and the second image occurs in accordance with the amount of defocusing.

In Figs. 10A, 10B, and 10C, a first light flux 1001 passing through the first pupil area 951 described above and a second light flux 1002 passing through the second pupil area 952 described above are illustrated. Fig. 10A is a diagram illustrating an in-focus state, and the first light flux 1001 and the second light flux 1002 converge at the same position on the image sensor 913.

In other words, the amount of defocusing is 0. At this time, a parallax amount between the first image of the first viewpoint formed using the first light flux 1001 and the second image of the second viewpoint formed using the second light flux 1002 is 0.

Fig. 10B is a diagram illustrating a defocused state in a negative direction of the z axis (the optical axis) on the image side in accordance with a relation between the position of the subject and the in-focus position 1000. At this time, a parallax amount between the first image of the first viewpoint formed using the first light flux and the second image of the second viewpoint formed using the second light flux has a negative value.

Fig. 10C illustrates a defocused state in a positive direction of the z axis (the optical axis) on the image side in accordance with a relation between the position of the subject and the in-focus position 1000. At this time, a parallax amount between the first image of the first viewpoint formed using the first light flux and the second image of the second viewpoint formed using the second light flux has a positive value.

In this way, the image side defocusing amount changes in accordance with the relation between the in-focus position and the subject position, and the parallax amount between the first image of the first viewpoint and the second image of the second viewpoint changes in correspondence with the image-side defocusing amount. In other words, by calculating a parallax amount between the first image of the first viewpoint and the second image of the second viewpoint, the defocusing amount can be calculated, and a distance to a subject can be calculated.

In this way, by using the imaging surface phase difference distance measuring system, calculation of a parallax amount, conversion from the parallax amount into a defocusing amount, conversion from the image-side defocusing amount into an object-side defocusing amount, and conversion from the object-side defocusing amount to a distance value can be performed, and thus a subject distance can be calculated.

Then, on the basis of the first image of the first viewpoint and the second image of the second viewpoint acquired from the camera device 911 of the imaging surface phase difference distance measuring system using the image sensor of the pupil division system illustrated in Fig. 9A, the stereo distance measuring unit 102 calculates a distance image. Then, similar to the first embodiment to the third embodiment, by using distance images of different times t1 and t2, the camera movement amount calculating unit 103 calculates a camera movement amount.

In this way, in the fourth embodiment, by using the camera device of the imaging surface phase difference distance measuring system using an image sensor of the pupil division system, an error of the camera movement amount calculated similar to the first embodiment to the third embodiment is reduced to have high accuracy, and the size can be reduced.

In addition, a calculation error of the camera movement amount in the fourth embodiment is calculated by comparing distance images of different times and thus is influenced not by absolution value error of the distance images but by a relative value error of the distance images.

However, while the absolute value error is an error according to a change in a base line length that is a gap between different viewpoints over time or a change in the in-focus position according to heat or temperature, in a short frame interval in which the same subject is commonly shown within a viewing angle, which is assumed in the present invention, there is no large change in the absolute value error. Thus, there is an absolute value error of an approximately the same distance value at the times t1 and t2, and thus the influence of the absolute value error is canceled by calculating a difference between distance values.

On the other hand, a relative value error receives the influence of a noise of the image sensor and takes a random value at each time and thus is not canceled by comparing distance images of different times, and the magnitude of the relative value error of a distance value depends on accuracy of calculation of the parallax amount.

When compared with the stereo image acquiring unit using two camera devices illustrated in Fig. 1, the stereo image acquiring unit composed of one optical system and one image sensor has an arrangement relation between different viewpoints that is defined with high accuracy, and thus the accuracy of calculation of the parallax amount is high. Thus, as in the fourth embodiment, by using the camera device configured using the imaging surface phase difference distance measuring system of the pupil division system, a calculated error of the camera movement amount is decreased, and a distance image having high accuracy can be generated.

(Fifth Embodiment)

In a fifth embodiment, a distance value (second distance information) is calculated by a feature point distance measuring unit using a calculated camera movement amount, and an error of the distance value of a stereo distance measuring unit is corrected by comparing this second distance information with a distance value (first distance information) calculated by the stereo distance measuring unit.

In other words, in the fifth embodiment, for example, similar to the third embodiment described above, a relative distance value is calculated from a set of distance images of different times, and a camera movement amount is calculated by scaling a calculated camera position/posture change amount. Then, by comparing a first distance value according to the stereo distance measuring unit and a second distance value according to the feature point distance measuring unit, a correction unit calculates a correction value of the stereo distance measuring unit and performs a correction of the stereo distance measuring unit.

Here, a correction of the stereo distance measuring unit represents a correction of an error according to a change in the stereo distance measuring unit over time. The error according to a change in the stereo distance measuring unit over time occurs in accordance with a change in the operation of an image-side defocusing amount from the time of design or the time of shipment.

More specifically, for example, when an amount of image face curvature of an imaging optical system changes in accordance with a change in the environment temperature or a shock from the outside, a relation between a defocusing amount and a subject distance collapses from a designed value, and it becomes a factor for a distance measuring error.

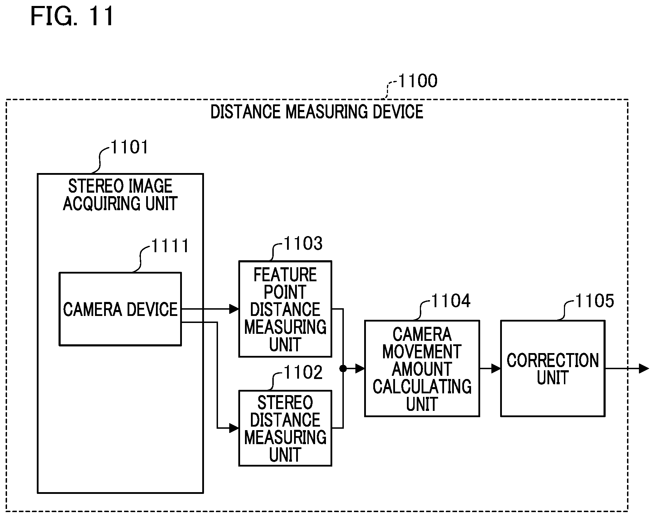

Fig. 11 is a functional block diagram illustrating a configuration of a distance measuring device 1100 according to the fifth embodiment.

A stereo image acquiring unit 1101, for example, includes one camera device 1111 of the imaging surface phase difference distance measuring system using an image sensor of the pupil division system as in the fourth embodiment. The distance measuring device 1100 includes a stereo distance measuring unit 1102, a feature point distance measuring unit 1103, and a camera movement amount calculating unit 1104 that are respectively the same as the stereo distance measuring unit 102, the feature point distance measuring unit 801, and the camera movement amount calculating unit 103 described above. Furthermore, a correction unit 1105 is included in the fifth embodiment.

The stereo distance measuring unit 1102 calculates a distance image 1121 of a time t1 from a first image of a first viewpoint and a second image of a second viewpoint at the time t1 acquired by the camera device 1111 of the stereo image acquiring unit 1101.

Similarly, a distance image 1122 of a time t2 (t1 < t2) is calculated from a third image of the first viewpoint and a fourth image of the second viewpoint at the time t2. Then, the camera movement amount calculating unit 1104 calculates a relative distance value 1123 using the technique described above by comparing a distance image set that is one set of distance images including the distance image 1121 of the time t1 and the distance image 1122 of the time t2.

Meanwhile, the feature point distance measuring unit 1103 calculates a camera position/posture change amount 1131 on the basis of the first image of the first viewpoint at the time t1 and the third image of the first viewpoint at the time t2 acquired by the camera device 1111. In addition, the feature point distance measuring unit 1103 calculates an optical flow 1132 corresponding to coordinates of the calculated feature points.

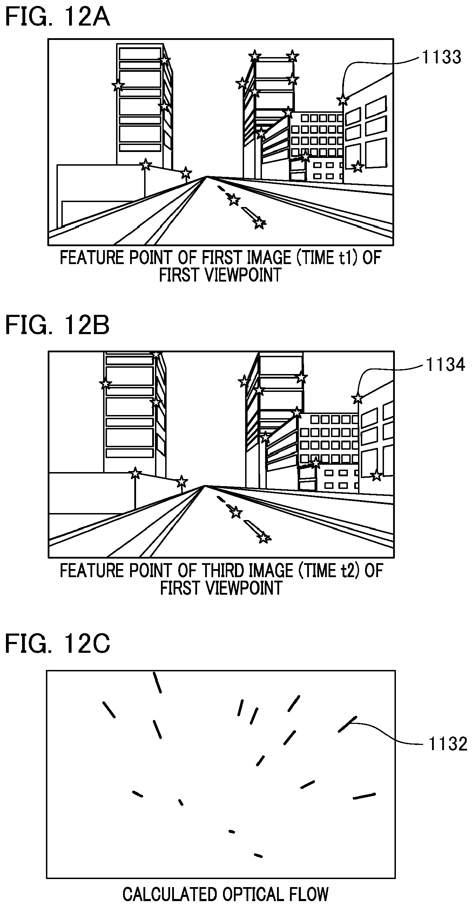

The optical flow 1132 will be described with reference to Figs. 12A to 12C. Fig. 12A is a diagram illustrating a result of calculation of feature points 1133 for the first image of the first viewpoint at the time t1. Similarly, Fig. 12B is a diagram illustrating a result of calculation of feature points 1134 for the third image of the first viewpoint at the time t2.

By acquiring a correspondence relation for these feature points 1133 and the feature points 1134 using a known technique, whereby an optical flow is calculated. Fig. 12C is a diagram illustrating the calculated optical flow 1132.

By performing an arithmetic operation similar to that of the camera movement amount calculating unit 103 according to the third embodiment, the camera movement amount calculating unit 1104 calculates a relative distance value 1123 and further calculates a camera movement amount 1141 that is a scaled actual movement amount.

The correction unit 1105 calculates a first distance value and a second distance value using the distance image 1121 of the time 11, the feature points 1133 of the first image at the time 11, the optical flow 1132, and the camera movement amount 1141. Then, by comparing the first distance value (first distance information) and the second distance value (second distance information), a correction value is calculated.

For the distance image 1121 (the first distance image) of the time t1 calculated by the stereo distance measuring unit 1102, a distance value is converted into an image side defocusing amount using an image formation relation equation that is a known technique using a focal distance f that is known from a designed value.

Fig. 13A is a diagram illustrating a distribution of first distance values 1151 according to the stereo distance measuring unit 1102 acquired by converting a distance image 1121 of a time t1, which are calculated by the stereo distance measuring unit 1102, into an image-side defocusing amount. Fig. 13A illustrates that, the darker the color, the more a relatively negative defocusing amount, in other words, a subject is present at a farther distance in space coordinates.

By using the optical flow 1132 and the scaled camera movement amount 1141, a second distance value corresponding to the coordinates position of the feature point 1133 on the first image of the first viewpoint at the time t1 is calculated using a known motion parallax distance measuring technique. The second distance value in the calculated feature point coordinates is similarly converted into an image-side defocusing amount using the image formation relation equation. In this way, each of the first distance information and the second distance information includes the image-side defocusing amount.

Fig. 13B is a diagram illustrating a distribution of second distance values 1152 calculated by the feature point distance measuring unit 1103. Coordinates of the feature points 1133 are discretely calculated inside an image, and thus corresponding second distance values 1152 are discretely distributed on the image.

Fig. 13C is a diagram illustrating an image-side defocusing amount along I- I' in Figs. 13A and 13B. A non-continuous segment (i) illustrated in Fig. 13C illustrates the first distance value 1151 according to the stereo distance measuring unit 1102, and point data (ii) illustrated in Fig. 13C illustrates the second distance value 1152 according to the feature point distance measuring unit 1103.

Here, in the first distance value 1151 according to the stereo distance measuring unit 1102, an error according to a change over time and the like such as a distance measuring error from a designed value of the image surface curvature amount according to a change in temperature are included.

Meanwhile, the second distance value 1152 according to the feature point distance measuring unit calculated on the basis of the optical flow is calculated from an image set having a frame interval that is much shorter than a time interval in which a change over time occurs and is not influenced by a change over time. Thus, when a difference between the first distance value and the second distance value is acquired, the difference value corresponds to an error in the image-side defocusing amount, which is influenced by a change over time, in accordance with a change over time.

Fig. 13D is a diagram illustrating an amount acquired by subtracting (ii) that is a second distance value 1152 according to the feature point distance measuring unit from (i) that is a first distance value 1151 according to the stereo distance measuring unit illustrated in Fig. 13C. In addition, actually the differential data 1301 of (i) - (ii) can be acquired on data acquisition coordinates 1302 that are coordinates of the feature points 1133.

In contrast to this, the error of the defocusing amount influenced by a change over time is a change in the in-focus position in each pixel and corresponds to a change in the image surface curvature amount. The image surface curvature amount represents a continuous and smooth shape, and thus differential data 1301 of (i) - (ii) between viewing angles, that is, between pixels is continuously connected smoothly.

Thus, by performing fitting through polynomial approximation using each piece of differential data 1301 acquired on each data acquisition coordinates 1302, interpolation between angles of views can be performed. In this way, an error amount 1303 of the defocusing amount acquired through polynomial approximation is illustrated using a broken line in Fig. 13D.

For description, although the image-side change amount through polynomial approximation is represented in one dimension along the segment I - I', an actual error amount of the defocusing amount is two-dimensional data on the xy plane. Thus, for an angle of view, by performing face fitting through polynomial approximation on the xy plane using acquired discrete differential data, the error amount of the defocusing amount is estimated. Approximated face data that is the error amount of the calculated defocusing amount is calculated as a correction value Ic.

In addition, the defocusing amount d that is the first distance value 1151 according to the stereo distance measuring unit 1102 is corrected using the following Equation 4 by using the calculated correction value Ic, whereby a defocusing amount d' is generated.

$$d' = d - Ic \ldots \text{(Equation 4)}$$

By using this corrected defocusing amount d', conversion from the defocusing amount to a distance value is performed using the technique described above, and a distance value of the stereo distance measuring unit can be corrected.

In addition, a distance value to be compared for calculating a correction value may be not only the image-side defocusing amount but also a distance value of an object-side space. In such a case, the amount of calculation required for conversion can be reduced and is appropriate. In addition, as illustrated in Fig. 1, the stereo image acquiring unit 1101 may have a configuration in which two camera devices are disposed to be away from each other by a constant gap. In such a case, a correction target for a change over time is a distance value of the object-side space due to a change in the relative position between the two camera devices.

As above, in the fifth embodiment, the influence of an error according to a change over time and the like in the distance measuring device 1100 can be reduced, and an effect of improvement of accuracy of measurement of a distance can be acquired.

(Sixth Embodiment)

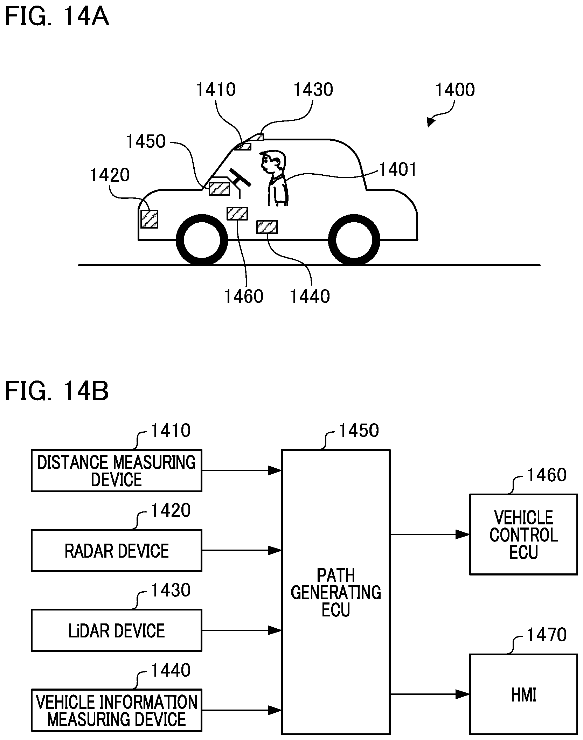

Fig. 14A is a schematic diagram illustrating a configuration of a vehicle 1400 as a movable apparatus according to a sixth embodiment, and Fig. 14B is a functional block diagram of the vehicle 1400. In addition, the movable apparatus according to the sixth embodiment is not limited to a car and may be an electric train, an airplane, a small mobility, various robots such as an Automatic Guided Vehicle (AGC), or the like and includes them.

In Fig. 14, the vehicle 1400 includes the distance measuring device 1410 as in the first embodiment to the fifth embodiment and includes a wave radar device 1420, a LiDAR device 1430, a vehicle information measuring device 1440, a path generating ECU 1450, and a vehicle control ECU 1460. Here, LiDAR is an abbreviation of Light Detection and Ranging, and ECU is an abbreviation of Electronic Control Unit.

Each of the path generating ECU 1450 and the vehicle control ECU 1460 includes a CPU and a memory in which a computer program for causing the CPU to perform an arithmetic operation process is stored.

The distance measuring device 1410 including camera devices images a surrounding environment including a traveling road of the vehicle 1400, generates image information representing a captured image and distance image information having information representing a distance to a subject for each pixel, and outputs the generated information to the path generating ECU 1450. The distance measuring device 1410 including camera devices, as illustrated in Fig. 14A, is disposed at an upper end of the front glass of the vehicle 1400 and images an area of a predetermined angle range (hereinafter, referred to as an imaging angle of view) in front of the vehicle 1400.

In addition, the information representing a distance to a subject may be information that can be converted into a distance from the distance measuring device 1410 to a subject within an imaging angle of view or may be information that can be converted using a predetermined reference table or a predetermined conversion coefficient and a conversion equation. For example, a distance value may be output to the path generating ECU 1450 with being assigned to a predetermined integer value.

In addition, information that can be converted into a conjugate distance value (a distance (a so-called defocusing amount) from an image sensor to a conjugate point or a distance from the optical system to a conjugate point (a distance from an image-side main point to a conjugate point)), which can be converted into a distance to a subject, may be optically output to the path generating ECU 1450. The vehicle information measuring device 1440 is a measuring device that detects a traveling speed and a steering angle of the vehicle 1400.

The path generating ECU 1450 is configured using a logic circuit. The path generating ECU 1450 receives a measurement signal from the vehicle information measuring device 1440, image information from the distance measuring device 1410, distance image information, distance information from the radar device 1420, and distance information from the LiDAR device 1430 as inputs.

Then, the path generating ECU 1450 generates target path information relating to at least one of a target traveling locus and a target traveling speed of at least the vehicle 1400 on the basis of the received information and sequentially outputs the generated target path information to the vehicle control ECU 1460.

The distance measuring device 1410, for example, inputs a movement amount calculated by the camera movement amount calculating unit 103 or a movement amount corrected by the correction unit 1105, that is, a movement amount of the vehicle 1400 as a moving device to the path generating ECU 1450.

Then, the path generating ECU 1450 as a control unit supplies the movement amount described above to the vehicle control ECU. In addition, the path generating ECU 1450 performs control of a warning operation or the movement operation of the vehicle 1400 as a moving device on the basis of the movement amount (or a speed calculated on the basis of the movement amount).

Furthermore, the vehicle 1400 may include a Human Machine Interface (HMI) 1470 that performs display of an image or notification using a voice for a driver 1401. In such a case, the target path information generated by the path generating ECU 1450 can be notified to the driver 1401 through the HMI 440.

By mounting the distance measuring device 1410 having functions according to the first embodiment to the fifth embodiment, accuracy of output distance information is improved, accuracy of target path information output from the path generating ECU 1450 is improved, and safer vehicle drive control can be realized.

In addition, since the camera movement amount of the distance measuring device 1410 provided in the vehicle 1400 corresponds to the movement amount of the vehicle 1400, a movement amount can be calculated simply from an image acquired by the distance measuring device 1410. Thus, also in a situation in which a GPS cannot be used such as inside a tunnel or a case in which a trouble has occurred in a GPS or the like, the movement amount of the vehicle 1400 can be calculated, and safter vehicle drive control can be realized.

In the description presented above, the distance measuring device 1410 as a measuring device has been described to calculate a movement amount of a camera (the stereo image acquiring unit). However, the movement amount according to the embodiment is not limited to the movement amount of the camera or the stereo image acquiring unit, and, for example, in the case of a use for which the camera (the stereo image acquiring unit) is fixed (for example, a monitoring camera or the like), to the contrary, the movement amount can be handled as a movement amount of the subject.

In such a case, a warning, recording, or the like can be performed in accordance with the movement amount of the subject. Alternatively, the movement amount may be handled as a relative movement amount between a camera (the stereo image acquiring unit) and a subject.

While the present invention has been described with reference to exemplary embodiments, it is to be understood that the invention is not limited to the disclosed exemplary embodiments. The scope of the following claims is to be accorded the broadest interpretation to encompass all such modifications and equivalent structures and functions.

In addition, as a part or the whole of the control according to the embodiments, a computer program realizing the function of the embodiments described above may be supplied to the measuring device through a network or various storage media. Then, a computer (or a CPU, an MPU, or the like) of the measuring device may be configured to read and execute the program. In such a case, the program and the storage medium storing the program configure the present invention.

This application claims the benefit of Japanese Patent Application No. 2022-029630 filed on February 28,2022, which is hereby incorporated by reference herein in its entirety.

A measuring device including: a stereo image acquiring unit configured to acquire a first image of a first viewpoint and a second image of a second viewpoint at a predetermined first time and acquire a third image of the first viewpoint and a fourth image of the second viewpoint at a second time different from the first time; a stereo distance measuring unit configured to acquire a first distance image from the first image and the second image and acquire a second distance image from the third image and the fourth image; and a movement amount calculating unit configured to calculate a relative movement amount between the stereo image acquiring unit and a subject between the first time and the second time on the basis of the first distance image and the second distance image.

**Claims**

1. A measuring device comprising at least one processor or circuit configured to function as:

   a stereo image acquiring unit configured to acquire a first image of a first viewpoint and a second image of a second viewpoint at a predetermined first time and acquire a third image of the first viewpoint and a fourth image of the second viewpoint at a second time different from the first time;
   a stereo distance measuring unit configured to acquire a first distance image from the first image and the second image and acquire a second distance image from the third image and the fourth image; and
   a movement amount calculating unit configured to calculate a relative movement amount between the stereo image acquiring unit and a subject between the first time and the second time on the basis of the first distance image and the second distance image.

2. The measuring device according to claim 1, wherein the movement amount calculating unit calculates the movement amount by statistically processing a relative distance value for each of pixels of the first distance image and the second distance image.

3. The measuring device according to claim 1, wherein the movement amount calculating unit performs association of pixels of the first distance image and the second distance image on the basis of information of an optical system and calculates a relative distance value by comparing distance information of the pixels associated with each other.

4. The measuring device according to claim 3, wherein the movement amount calculating unit calculates the movement amount on the basis of a peak of an approximation curve fitted to a histogram of the relative distance values.

5. The measuring device according to claim 1, wherein the movement amount calculating unit includes a feature point distance measuring unit configured to calculate a position/posture change amount of the stereo image acquiring unit on the basis of a correspondence relation between feature points of the first image and the third image, and the movement amount calculating unit calculates the movement amount by performing scaling of the position/posture change amount using a relative distance value between the first distance image and the second distance image.

6. The measuring device according to claim 1, wherein the stereo image acquiring unit acquires the fourth image from the first image using an image sensor of a pupil division system.

7. The measuring device according to claim 5,

   wherein the stereo distance measuring unit calculates first distance information of each pixel, and
   wherein the feature point distance measuring unit calculates an optical flow on the basis of a correspondence relation between feature points of the first image and the third image and calculates second distance information of each pixel on the basis of the optical flow and the movement amount,
   the measuring device further comprising a correction unit for correcting an output of the stereo image acquiring unit using the first distance information and the second distance information.

8. The measuring device according to claim 7, wherein the first distance information and the second distance information are image-side defocusing amounts.

9. A moving device comprising: at least one processor or circuit configured to function as:

   a stereo image acquiring unit configured to acquire a first image of a first viewpoint and a second image of a second viewpoint at a predetermined first time and acquire a third image of the first viewpoint and a fourth image of the second viewpoint at a second time different from the first time;
   a stereo distance measuring unit configured to acquire a first distance image from the first image and the second image and acquire a second distance image from the third image and the fourth image;
   a movement amount calculating unit configured to calculate a relative movement amount between the stereo image acquiring unit and a subject between the first time and the second time on the basis of the first distance image and the second distance image; and
   a control unit configured to perform warning or control of a movement operation of the moving device on the basis of the movement amount calculated by the movement amount calculating unit.

10. A measuring method comprising:

    acquiring a first image of a first viewpoint and a second image of a second viewpoint at a predetermined first time and acquiring a third image of the first viewpoint and a fourth image of the second viewpoint at a second time different from the first time by using a stereo camera;
    acquiring a first distance image from the first image and the second image and acquiring a second distance image from the third image and the fourth image; and
    calculating a relative movement amount between the stereo camera and a subject between the first time and the second time on the basis of the first distance image and the second distance image.

11. A non-transitory computer-readable storage medium configured to store a computer program comprising instructions for executing following processes:

    acquiring a first image of a first viewpoint and a second image of a second viewpoint at a predetermined first time and acquiring a third image of the first viewpoint and a fourth image of the second viewpoint at a second time different from the first time by using a stereo camera;
    acquiring a first distance image from the first image and the second image and acquiring a second distance image from the third image and the fourth image; and
    calculating a relative movement amount between the stereo camera and a subject between the first time and the second time on the basis of the first distance image and the second distance image.

FIG. 1

FIG. 2

```
        ┌─────────────┐
        │    START    │
        └─────────────┘
               │
               ▼
  ┌──────────────────────────┐
  │   ACQUIRE STEREO IMAGE   │────  S201
  └──────────────────────────┘
               │
               ▼
  ┌──────────────────────────┐
  │     PERFORM STEREO       │
  │   DISTANCE MEASURING     │────  S202
  └──────────────────────────┘
               │
               ▼
  ┌──────────────────────────┐
  │   CALCULATE MOVEMENT     │
  │         AMOUNT           │────  S203
  └──────────────────────────┘
               │
               ▼
        ┌─────────────┐
        │     END     │
        └─────────────┘
```

## FIG. 3A

IMAGE OF FIRST VIEWPOINT AT TIME t1

## FIG. 3B

DISTANCE IMAGE OF TIME t1

## FIG. 3C

IMAGE OF FIRST VIEWPOINT AT TIME t2

## FIG. 3D

DISTANCE IMAGE OF TIME t2

## FIG. 3E

DISTANCE DIFFERENTIAL IMAGE FOR TIME t1
AND TIME t2

FIG. 4A

```
        ┌─────────┐
        │  START  │
        └─────────┘
             │
             ▼
   ┌───────────────────────┐
   │ ACQUIRE STEREO IMAGE  │───S401
   └───────────────────────┘
             │
             ▼
   ┌───────────────────────┐
   │  PERFORM STEREO       │───S402
   │  DISTANCE MEASURING   │
   └───────────────────────┘
             │
             ▼
   ║───────────────────────║
   ║  CALCULATE MOVEMENT   ║───S403
   ║  AMOUNT               ║
   ║───────────────────────║
             │
             ▼
        ┌─────────┐
        │   END   │
        └─────────┘
```

FIG. 4B

```
        ┌─────────┐
        │  S403   │
        └─────────┘
             │
             ▼
   ╱───────────────────────╱
  ╱ DISTANCE IMAGE (t1)   ╱
 ╱  DISTANCE IMAGE (t2)  ╱
╱───────────────────────╱
             │
             ▼
   ┌───────────────────────┐
   │ PERFORM SPACE COORDINATE│───S411
   │ CALCULATING PROCESS     │
   └───────────────────────┘
             │
             ▼
   ┌───────────────────────┐
   │ PERFORM SPACE COORDINATE│───S412
   │ ASSOCIATING PROCESS     │
   └───────────────────────┘
             │
             ▼
   ┌───────────────────────┐
   │ PERFORM SPACE COORDINATE│───S413
   │ COMPARING PROCESS       │
   └───────────────────────┘
             │
             ▼
   ┌───────────────────────┐
   │ PERFORM STATISTICAL PROCESS│───S414
   │ OF RELATIVE DISTANCE VALUES│
   └───────────────────────┘
             │
             ▼
   ╱───────────────────────╱
  ╱ CAMERA MOVEMENT       ╱
 ╱  AMOUNT              ╱
╱───────────────────────╱
             │
             ▼
        ┌─────────┐
        │   END   │
        └─────────┘
```

FIG. 5

# FIG. 6A

# FIG. 6B

FRAME TIME t1

R11(x11, y11, z11)
R12(x12, y12, z12)
R13(x13, y13, z13)
.
.
R1a(x1a, y1a, z1a)
.
.
.
R1n(x1n, y1n, z1n)

CORRESPONDING POINT

FRAME TIME t2

R21(x21, y21, z21)
R22(x22, y22, z22)
R23(x23, y23, z23)
.
.
.
R2b(x2b, y2b, z2b)
.
.
R2n(x2n, y2n, z2n)

FIG. 7

FREQUENCY

701

702

RELATIVE
DISTANCE VALUE

FIG. 8

800

DISTANCE MEASURING DEVICE

101

STEREO IMAGE
ACQUIRING UNIT

111

CAMERA
DEVICE

112

CAMERA
DEVICE

801

FEATURE POINT
DISTANCE
MEASURING UNIT

102

STEREO
DISTANCE
MEASURING UNIT

103

CAMERA MOVEMENT
AMOUNT
CALCULATING UNIT

FIG. 9A

FIG. 9B

FIG. 9C

FIG. 9D

FIG. 9E

EP 4 235 574 A1

FIG. 10A

FIG. 10B

FIG. 10C

## FIG. 11

1100

DISTANCE MEASURING DEVICE

1101

STEREO IMAGE ACQUIRING UNIT

1111

CAMERA DEVICE

1103

FEATURE POINT DISTANCE MEASURING UNIT

1102

STEREO DISTANCE MEASURING UNIT

1104

CAMERA MOVEMENT AMOUNT CALCULATING UNIT

1105

CORRECTION UNIT

FIG. 12A

FEATURE POINT OF FIRST IMAGE (TIME t1) OF
FIRST VIEWPOINT

FIG. 12B

FEATURE POINT OF THIRD IMAGE (TIME t2) OF
FIRST VIEWPOINT

FIG. 12C

CALCULATED OPTICAL FLOW

FIG. 13A

FIG. 13B

FIG. 13C

FIG. 13D

EP 4 235 574 A1

## FIG. 14A

## FIG. 14B

Europäisches
Patentamt

European
Patent Office

Office européen
des brevets

# EUROPEAN SEARCH REPORT

**Application Number**

EP 23 15 3383

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | HARVILLE M ET AL: "3D pose tracking with linear depth and brightness constraints", COMPUTER VISION, 1999. THE PROCEEDINGS OF THE SEVENTH IEEE INTERNATION AL CONFERENCE ON KERKYRA, GREECE 20-27 SEPT. 1999, LOS ALAMITOS, CA, USA,IEEE COMPUT. SOC, US, vol. 1, 20 September 1999 (1999-09-20), pages 206-213, XP010350480, ISBN: 978-0-7695-0164-2 | 1-3,9-11 | INV. G06T7/593 G06T7/254 G06T7/579 |
| A | * abstract * * Section 1 * * Section 3.2 * | 4 | |
| X | EP 3 798 981 A1 (SAMSUNG ELECTRONICS CO LTD [KR]) 31 March 2021 (2021-03-31) | 1-3,5-11 | |
| A | * paragraph [0001] - paragraph [0002] * * paragraph [0060] - paragraph [0074] * * paragraph [0084] - paragraph [0095] * * paragraph [0112] - paragraph [0115] * * figures 1,6-8,10 * | 4 | |
| A | Rahul Garg ET AL: "Learning Single Camera Depth Estimation using Dual-Pixels", , 14 August 2019 (2019-08-14), XP055766033, Retrieved from the Internet: URL:https://arxiv.org/abs/1904.05822 [retrieved on 2021-01-18] * the whole document * | 1-11 | **TECHNICAL FIELDS SEARCHED (IPC)** G06T |

-/--

The present search report has been drawn up for all claims

| Place of search | Date of completion of the search | Examiner |
|---|---|---|
| Munich | 21 July 2023 | Salvador, Elena |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt
European
Patent Office
Office européen
des brevets

# EUROPEAN SEARCH REPORT

**Application Number**

EP 23 15 3383

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | DAVID NISTER ET AL: "Visual Odometry for Ground Vehicle Applications", JOURNAL OF FIELD ROBOTICS, JOHN WILEY & SONS, INC, US, vol. 23, no. 1, 1 January 2006 (2006-01-01), pages 3-20, XP009133367, ISSN: 1556-4959 [retrieved on 2006-01-26] * abstract * * Sections 2-4 * | 1-11 | |
| A | CLIPP B ET AL: "Robust 6DOF Motion Estimation for Non-Overlapping, Multi-Camera Systems", APPLICATIONS OF COMPUTER VISION, 2008. WACV 2008. IEEE WORKSHOP ON, IEEE, PISCATAWAY, NJ, USA, 7 January 2008 (2008-01-07), pages 1-8, XP031273492, ISBN: 978-1-4244-1913-5 * the whole document * | 1-11 | |
| A | DAVIDE SCARAMUZZA ET AL: "Absolute scale in structure from motion from a single vehicle mounted camera by exploiting nonholonomic constraints", COMPUTER VISION, 2009 IEEE 12TH INTERNATIONAL CONFERENCE ON, IEEE, PISCATAWAY, NJ, USA, 29 September 2009 (2009-09-29), pages 1413-1419, XP031672624, ISBN: 978-1-4244-4420-5 * the whole document * | 1-11 | |

**TECHNICAL FIELDS SEARCHED (IPC)**

The present search report has been drawn up for all claims

| Place of search | Date of completion of the search | Examiner |
|---|---|---|
| Munich | 21 July 2023 | Salvador, Elena |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 15 3383

This annex lists the patent family members relating to the patent documents cited in the above-mentioned European search report.
The members are as contained in the European Patent Office EDP file on
The European Patent Office is in no way liable for these particulars which are merely given for the purpose of information.

21-07-2023

| Patent document cited in search report | | Publication date | Patent family member(s) | | Publication date |
|---|---|---|---|---|---|
| EP 3798981 | A1 | 31-03-2021 | CN | 112562087 A | 26-03-2021 |
| | | | EP | 3798981 A1 | 31-03-2021 |
| | | | KR | 20210036574 A | 05-04-2021 |
| | | | US | 2021097716 A1 | 01-04-2021 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 4814669 A
- JP 2022029630 A